# EUROPÄISCHE PATENTANMELDUNG

(11) **EP 1 958 854 A2**
(43) Veröffentlichungstag der Anmeldung: **20.08.2008**
(21) Anmeldenummer: 08001987.0
(22) Anmeldetag: 02.02.2008
(51) Int. Cl.: B62D 25/10

(54) **Zweiflüglige Haube**

(30) Priorität: 15.02.2007 DE 102007007518
(71) Anmelder: Bergmann, Johannes Hermann, 49733 Haren/Ems (DE)
(72) Erfinder: Bergmann, Johannes Hermann, 49733 Haren/Ems (DE)
(74) Vertreter: Habbel, Ludwig

(57) **Zusammenfassung**

Bei einem Motorfahrzeug, mit einer Haube (5), welche ein als technische Komponente bezeichnetes Aggregat oder einen Behälter abdeckt, wobei sich die Haube oberhalb der Komponente erstreckt und diese nach oben hin abdeckt, und wobei die Haube aus ihrer abdeckenden Normalstellung in eine den Zugang zur Komponente ermöglichenden Offenstellung schwenkbeweglich ist, schlägt die Erfindung vor, dass die Haube zwei als Flügel (7) bezeichnete Segmente aufweist, deren Trennlinie wenigstens teilweise oberhalb der Komponente verläuft, wobei jeder Flügel um eine aufrechte Schwenkachse (12) zwischen seiner Normal- und der Offenstellung schwenkbar ist.

## Beschreibung

Die Erfindung betrifft ein Motorfahrzeug nach dem Oberbegriff des Anspruchs 1.

Gattungsgemäße Motorfahrzeuge sind seit langem bekannt, z. B. aus der DE 364 273 A oder der GB 193 680, die jeweils in den 20er Jahren des 20. Jahrhunderts veröffentlicht wurden. Auch noch in der jüngeren Vergangenheit sind Motorfahrzeuge gattungsgemäß ausgestaltet worden, insbesondere Nutzfahrzeuge, wie die US 6 116 366 A oder die US 2001/000 4949 A zeigen.

Gattungsgemäß ausgestaltete Motorfahrzeuge sind in der Praxis beispielsweise in Form von Kommunal-, Forst- und landwirtschaftlichen oder Baufahrzeugen bekannt, wie z. B. Radlader, Knicklenker oder Muldenkipper, oder als Straßenfahrzeuge wie LKWs. Die Motorfahrzeuge können als Radfahrzeuge mit einer oder mehreren angetriebenen Achsen oder als Kettenfahrzeuge ausgestaltet sein.

Technische Komponenten, die zu Reparatur- oder Wartungszwecken zugänglich sein müssen, können der Antriebsmotor des Motorfahrzeugs sein, oder das Getriebe, oder zusätzliche Hydraulikaggregate, oder auch Behälter wie z. B. ein Öltank, wobei auch zwei oder mehrere derartige Komponenten gemeinsam von einer Haube abgedeckt sein können.

Die betreffende Komponente ist bei einem gattungsgemäßen Motorfahrzeug mittels einer Haube abdeckt, die sich über die Komponente erstreckt, so dass die Komponente bei geöffneter Haube von oben zugänglich ist. Die gattungsgemäße Haube steht daher im Gegensatz zu einer Wartungsklappe, die beispielsweise in einer Seitenwand eines Gehäuses angeordnet ist und einen seitlichen Zugang ermöglicht. Die gattungsgemäßen Motorfahrzeuge können Hauben aufweisen, die auf drei Seiten die abzudeckende Komponente seitlich umgeben sowie sich zusätzlich oberhalb der Komponente erstrecken.

Je nach Größe der abzudeckenden Komponente, beispielsweise der verwendeten Antriebsmotoren der Motorfahrzeuge, weisen die Hauben erhebliche Abmessungen und Gewichte auf. Sie werden üblicherweise um liegende Schwenkachsen aufgestellt. Die Öffnung der Haube erfordert häufig so große Kräfte und die Schwenkbewegung bringt die Haube in eine solche Höhe, dass das Öffnen der Haube vorn Fahrzeugbediener nicht manuell bewerkstelligt werden kann, so dass Hilfseinrichtungen wie Getriebe oder Hydraulikstempel vorgesehen sein müssen, die gegebenenfalls ihrerseits mittels eines Hebels oder einer Kurbel für den Fall eines Motorausfalls manuell bedient werden können. Zudem ist ein vergleichsweise großer konstruktiver Aufwand erforderlich, um die Haube in ihrer Offenstellung zu halten, beispielsweise auch, weil die großflächigen Motorhauben außer ihrem Gewicht große Windangriffsflächen bieten und entsprechend abgesichert sein müssen, um das Wartungspersonal nicht zu gefährden.

Die Haube und die abzudeckende Komponente können vor, neben oder hinter einem Führerstand bzw. einer Fahrerkabine angeordnet sein, oder das Motorfahrzeug kann ohne einen Führerstand bzw. ohne eine Fahrerkabine ausgestaltet sein, z. B. als von außen steuerbares bzw. fernsteuerbares Fahrzeug.

Nachfolgend wird - beispielhaft und stellvertretend - vielfach das Motorfahrzeug als Nutzfahrzeug, die abzudeckende Komponente als Motor und die Haube als Motorhaube bezeichnet, ohne den vorliegenden Vorschlag auf die Abdeckung von Nutzfahrzeug-Motoren zu beschränken. Bei einer derartigen Anwendung ergeben sich aufgrund der Größe und des Gewichts sowie der häufig beengten Einbausituation besonders deutlich die Vorteile des vorliegenden Vorschlags gegenüber herkömmlichen Hauben, die um eine liegende Achse verschwenkt werden.

Je nach Ausgestaltung des Nutzfahrzeuges besteht neben den oben angesprochenen Problemen, die Motorhaube zu öffnen und in ihrer Offenstellung zu halten und zu sichern, das Problem, die Zugänglichkeit zum Motor auch unter widrigen Bedingungen zu ermöglichen. Beispielsweise kann die Motorhaube ganz oder teilweise von einem Hindernis überdeckt sein, z. B. durch einen Kranausleger, oder bei Muldenkippern durch die Mulde des Nutzfahrzeugs, so dass in solchen Fällen das Aufstellen der Motorhaube, also das Verschwenken der Motorhaube in ihre Offenstellung, erst möglich ist, nachdem das über die Motorhaube ragende Hindernis entfernt ist. Beispielsweise muss erst die Mulde hochgekippt werden, also in ihre Entleerungsstellung bewegt werden. Dies ist beispielsweise dann problematisch, wenn der Antriebsmotor des Nutzfahrzeugs vollständig ausgefallen ist und keine Energie bereitstellt, um die Mulde zu kippen. In diesem Fall muss zunächst die Mulde manuell gekippt werden, beispielsweise mittels einer hydraulischen Handpumpe in ihre Entladestellung gekippt werden, um anschließend die Motorhaube öffnen und den Motor reparieren zu können. Dies ist nicht nur umständlich, weil die Mulde manuell gekippt werden muss, sondern weil zwangsläufig der ggf. geladene Muldeninhalt dort ausgeleert wird, wo sich das havarierte Fahrzeug momentan befindet.

Der Erfindung liegt die Aufgabe zugrunde, ein gattungsgemäßes Motorfahrzeug dahingehend zu verbessern, dass dieses einen problemlosen Zugang zu der abgedeckten Komponente ermöglicht, und welches insbesondere hinsichtlich der Haube und ihrer Lagerung möglichst wirtschaftlich herstellbar ist.

Diese Aufgabe wird durch ein Motorfahrzeug mit den Merkmalen des Anspruchs 1 gelöst.

Die Erfindung schlägt mit anderen Worten vor, die Haube nicht einstückig zu verschwenken, sondern vielmehr in wenigstens zwei Segmente zu unterteilen, wobei zwei Segmente als Flügel bezeichnet sind und die Trennlinie zwischen den beiden Flügeln wenigstens teilweise oberhalb der abzudeckenden Komponente verläuft. Die Haube kann geschlossen werden, indem diese beiden Flügel um ihre jeweils aufrechte Schwenkachse zueinander verschwenkt werden, und die Haube wird geöffnet, indem die beiden Flügel auseinander geschwenkt werden.

Durch die Aufteilung der Haube in mehrere Segmente reduziert sich das Gewicht der zu bewegenden Bauteile, so dass die Handhabung der Haube für das Personal einfacher wird. Auch die konstruktive Ausgestaltung der Hauben-Lagerung wird aus diesem Grunde einfacher. Besteht die Haube nur aus den beiden Flügeln, so kann das jeweils handzuhabende und zu lagernde Gewicht etwa halbiert werden, verglichen mit dem Gesamtgewicht der Haube.

Eine weitere Vereinfachung ergibt sich daraus, dass die Flügel nicht um eine liegende Achse hochgeschwenkt werden, sondern um eine aufrechte Achse flach verschwenkt werden, so dass das Personal nicht das gesamte Gewicht des Flügels heben muss. Hilfsaggregate zur Kraftunterstützung beim Verschwenken des Flügels sind daher in vielen Fällen nicht erforderlich.

Eine weitere Vereinfachung ergibt die flache Schwenkbewegung, indem auch bei großformatigen Abmessungen des jeweiligen Flügels dessen Erreichbarkeit für das Personal über den gesamten Schwenkweg problemlos sichergestellt bleibt. Beispielsweise kann ein am Flügel befindlicher Handgriff in einer Höhe zwischen Hüft- und Brusthöhe des Personals vorgesehen sein, so dass dieser Handgriff während der gesamten Schwenkbewegung des Flügels problemlos erfasst und gehalten werden kann.

Auch ergibt die flache Schwenkbewegung eine weitere konstruktive Vereinfachung dadurch, dass die Flügel nicht aufgestellt werden wie eine herkömmliche, um eine liegende Achse verschwenkbare Motorhaube. Die konstruktiv bereitzustellenden Haltekräfte, welche die Flügel in ihrer Offenstellung halten, können daher erheblich kleiner bemessen sein als für eine herkömmliche Motorhaube, die bei ihrer abwärts gerichteten Schwenkbewegung aus der Offen- in die Normalstellung zunehmend mit ihrem Eigengewicht gegen solche Haltekräfte wirkt. Stützstreben, Gasdruckdämpfer oder dergleichen können daher für eine vorschlagsgemäße Haube kleiner, leichter und wirtschaftlicher ausgestaltet sein.

Zudem bieten die Flügel einer vorschlagsgemäßen Haube auch in ihrer Offenstellung keine große Windangriffsfläche für eine Windrichtung, welche den Flügel in seine Normalstellung zurückzuführen bestrebt ist, auch dies im Gegensatz zu den erwähnten herkömmlichen Motorhauben. Die Sicherung gegen unbeabsichtigte Schließbewegungen der Flügel kann daher bei Einhaltung eines gleichen Sicherheitsniveaus sehr viel wirtschaftlicher ausgeführt werden.

Dadurch, dass die Schwenkachse aufrecht verläuft, werden die Flügel in einer flachen Schwenkbewegung zwischen Normal-und Offenstellung bewegt. Hierdurch ergibt sich vorteilhaft die Möglichkeit, die Flügel beispielsweise unter einer Mulde hinweg zu verschwenken, so dass, wenn das Nutzfahrzeug als Muldenkipper ausgestaltet ist oder sich ein anderer Teil des Nutzfahrzeugs über die Motorhaube erstreckt, beispielsweise ein Betonmischbehälter, eine Teleskopeinrichtung oder dergleichen, die Motorhaube geöffnet werden kann, ohne dass dieses betreffende Bauteil, wie beispielsweise die erwähnte Mulde, angehoben werden muss.

Für Wartungs- oder Reparaturarbeiten, bei denen ein Zugang von oben erforderlich ist, beispielsweise mit einem Hebegeschirr, ermöglicht die vorschlagsgemäße Haube diesen Zugang ohne die Notwendigkeit, die Haube zu demontieren.

Vorteilhaft kann ein Flügel länglich ausgestaltet sein und seine Schwenkachse an seinem Ende aufweisen. So ergibt sich ein möglichst großer zugänglicher Freiraum dort, wo sich der Flügel zuvor in seiner Normalstellung befand, so dass ein optimaler Zugang zu der zuvor abgedeckten Komponente geschaffen wird.

Die beiden Segmente können ähnlich wie die Flügel eines Marienkäfers verschwenkt werden, also indem die beiden Flügel parallel zueinander verlaufen und die Schwenkachsen an zwei benachbarten Enden der Flügel angeordnet sind. Auf diese Weise ergibt sich an den beiden gegenüberliegenden Enden eine sehr große Öffnung auch schon bei kleinen Schwenkwinkeln, so dass auch bei beengten Platzverhältnissen ein guter Zugang zu der technischen Komponente geschaffen wird.

In der Praxis können Hindernisse in dem Verlauf der Bahnkurve liegen, den ein Flügel der Haube bei seiner Schwenkbewegung beschreibt. Beispielsweise wenn die Haube nahe der Fahrzeugmitte angeordnet ist, z. B. als Motorhaube hinter einer Fahrerkabine des Nutzfahrzeugs, kann sich für eine seitliche Schwenkbewegung der Motorhaube das Problem ergeben, dass Staukästen, oder die Vorderräder bei einem Radfahrzeug oder die Kette bei einem Kettefahrzeug hinter der Fahrerkabine und seitlich von dem Motor angeordnet sind und einer derartigen Schwenkbewegung im Wege sein können.

Vorteilhaft kann daher vorgesehen sein, dass die Schwenkachse gegenüber der Vertikalen schräg ausgerichtet ist, also zwar aufrecht verläuft, jedoch nicht exakt vertikal. Insbesondere, wenn dabei vorteilhaft die Schrägstellung so gewählt ist, dass der Flügel während seiner Schwenkbewegung in die Offenstellung in einer flachen Bahnkurve angehoben wird, kann er beispielsweise über das Vorderrad und gegebenenfalls über einen das Vorderrad abdeckenden Kotflügel hinweg verschwenkt werden. Auf diese Weise ist die Öffnung der Motorhaube ohne Demontage oder Verschwenkung von Kotflügeln möglich, so dass einerseits die Ausgestaltung des Nutzfahrzeuges besonders preisgünstig erfolgen kann, da auf zusätzliche Bauteile, Gelenke und dergleichen verzichtet werden kann und andererseits die Handhabung der Motorhaube besonders schnell und unkompliziert erfolgt.

Insbesondere wenn das Nutzfahrzeug eine Fahrerkabine aufweist, die vor dem Motor und der Vorderachse angeordnet ist, kann vorteilhaft die Schwenkachse am vorderen Ende der Motorhaube vorgesehen sein, also an dem zur Fahrerkabine weisenden Ende des jeweiligen Flügels. Beim Öffnen der Motorhaube um die vorderen Schwenkachsen ist ein problemloser Zugang zum Motor von dem Bereich zwischen den beiden Achsen des Nutzfahrzeuges her möglich.

Vorteilhaft können die Flügel der Motorhaube um 90° oder mehr verschwenkt werden, um eine vollständige Zugänglichkeit zum Motor zu ermöglichen. Während bereits Teilöffnungen der Motorhaube eine gute Zugänglichkeit zum Motor bzw. Getriebe ermöglichen und somit eine Vielzahl von regelmäßigen Wartungsarbeiten ermöglichen können, kann durch die weitergehende Verschwenkung der Flügel für spezielle Wartungs- oder Reparaturarbeiten die Zugänglichkeit zum Motor noch weiter verbessert werden, so dass ggfs. der Motor komplett ausgebaut und z. B. angehoben werden kann, ohne die Motorhaube demontieren zu müssen.

Vorteilhaft können die beiden Flügel bei geschlossener Motorhaube unmittelbar aneinander anliegen, also ohne einen oberen, mittleren Trennsteg der Motorhaube, so dass ein guter Zugang zum Motor von oben möglich ist.

Unterscheidet man ein Lagerungs-Ende und ein Öffnungs-Ende bei den Flügeln, so weist das Lagerungs-Ende das Schwenklager auf, um welches der Flügel verschwenkbar ist, und das Öffnungs-Ende ist das gegenüberliegende Ende des Flügels, wo sich die Motorhaube am weitesten öffnet, wenn man einen oder beide Flügel aus der Normal- in die Offenstellung zu verschwenken beginnt. Der Zugang zum Motor vorn Öffnungs-Ende her ist vorteilhaft problemlos, wenn dort keine Stege, lange Ausleger oder dergleichen für die Flügel vorgesehen sind.

Vorteilhaft weist die vorschlagsgemäße Motorhaube daher weder einen oberen Trennsteg zwischen den beiden Flügeln auf, noch die erwähnten Stege, lange Ausleger oder dergleichen für die Flügel an deren Öffnungs-Ende. Vielmehr werden die Flügel vorzugsweise ausschließlich an ihren Schwenkachsen gelagert und in ihrer Normalstellung miteinander verriegelt. Wenn sie die abzudeckende Komponente eng umgeben oder einem Rahmenbauteil des Fahrzeugs nah benachbart sind, beispielsweise im Bereich der ohnehin vorgesehenen Motorlagerung, so können dort Verriegelungsstellen für die Flügel vorgesehen sein, um z. B. übermäßige Schwingungen der Flügel zu verhindern, wobei diese Verriegelungsstellen zusätzlich zu der Verriegelung der Flügel miteinander oder alternativ dazu vorgesehen sein können.

Ein Ausführungsbeispiel der Erfindung wird anhand der rein schematischen Darstellungen nachfolgend näher erläutert. Dabei zeigt
- Fig. 1: ein Nutzfahrzeug in Seitenansicht, wobei das Nutzfahrzeug als Knicklenker-Muldenkipper ausgestaltet ist,
- Fig. 2: eine Draufsicht auf das Fahrzeug von Fig. 1, wobei etliche Teile des Nutzfahrzeugs weggelassen sind und beispielsweise insbesondere die Mulde nicht dargestellt ist,
- Fig. 3: eine Ansicht ähnlich Fig. 2, jedoch bei geöffneter Haube,
- Fig. 4: eine perspektivische Ansicht auf die in Fig. 2 dargestellte Fahrzeugkonfiguration,
- Fig. 5: eine Darstellung in derselben Perspektive wie Fig. 4, bei einseitig geöffneter Haube,
- Fig. 6: eine Ansicht ähnlich Fig. 5, jedoch bei komplettem Fahrzeug, also mit dargestellter Mulde,
- Fig. 7: die Öffnungssituation wie in Fig. 6, jedoch in einer Seitenansicht auf das Fahrzeug, und
- Fig. 8: eine perspektivische Ansicht auf den Bereich der Lagerung der Haube, wobei einige Teile auseinandergezogen dargestellt und andere Teile zugunsten einer besseren Übersichtlichkeit weggelassen sind.

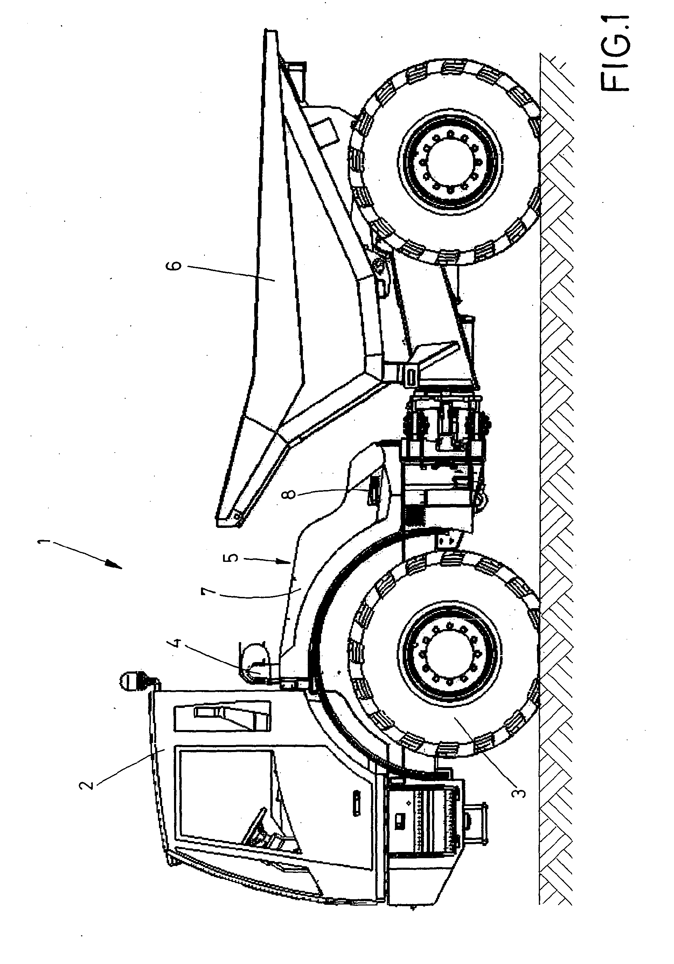

In den Zeichnungen ist mit 1 insgesamt ein Nutzfahrzeug bezeichnet. Dieses weist eine Fahrerkabine 2 auf, die vor den Vorderrädern 3 des Nutzfahrzeugs 1 angeordnet ist. Hinter der Fahrerkabine 2 ist ein Antriebsmotor samt Getriebe angeordnet. Ein Schalldämpfer 4 von der Abgasanlage des Motors ist in Fig. 1 ersichtlich. Dieser Motor ist durch eine Haube 5 abgedeckt. Das Nutzfahrzeug 1 weist weiterhin eine Mulde 6 auf, die sich teilweise über den Motor und die Haube 5 erstreckt.

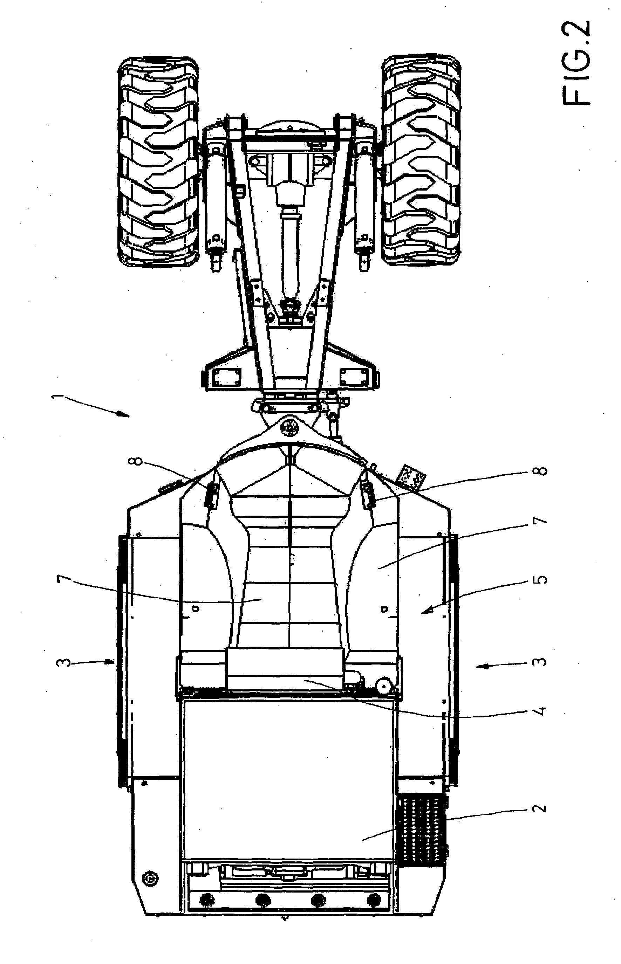

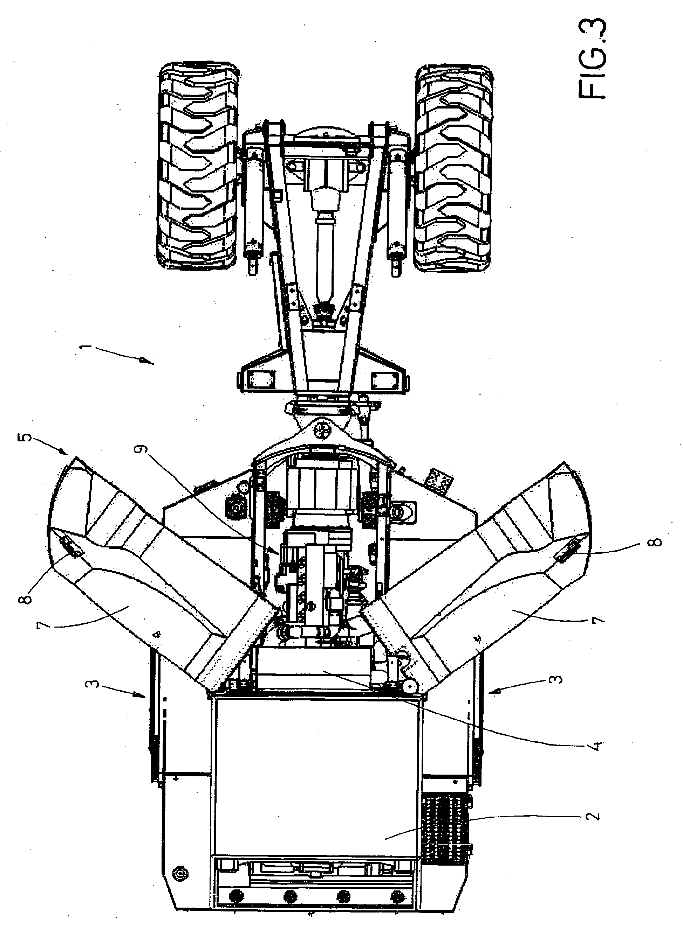

Die Haube 5 ist - wie Fig. 2 zeigt - zweiflüglig ausgestaltet, wobei die beiden Flügel jeweils mit 7 gekennzeichnet sind. Die Flügel 7 grenzen unmittelbar aneinander und sind in Fahrzeuglängsrichtung voneinander getrennt. Handgriffe 8 dienen einerseits dazu, die Verriegelung der beiden Flügel 7 zu lösen und anschließend dazu, die Flügel 7 zu handhaben und aus ihrer in Fig. 2 gezeigten Normalstellung in eine Offenstellung zu verschwenken, die in Fig. 3 dargestellt ist.

Aus dem Vergleich der Figuren 2 und 3 wird deutlich, dass die Schwenkachsen für die beiden Flügel 7 in dem Bereich ihres jeweils vorderen Endes vorgesehen sind, so dass die Haube 5 hinten öffnet und die beiden Flügel 7 sowohl zur Seite als auch nach vorn verschwenkt werden. In der Offenstellung gibt die Haube 5 den Zugang zum Motor 8 frei, der, wie aus Fig. 3 erkennbar ist, bereits in der dargestellten, nur teilweise öffnenden Offenstellung der Flügel 7 gut zugänglich ist für Wartungs- und Reparaturarbeiten.

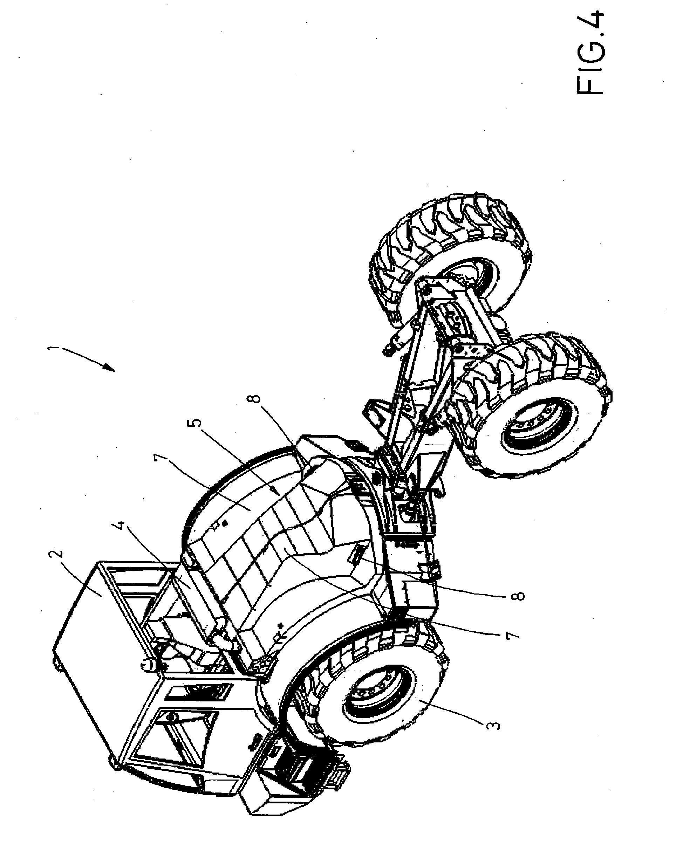

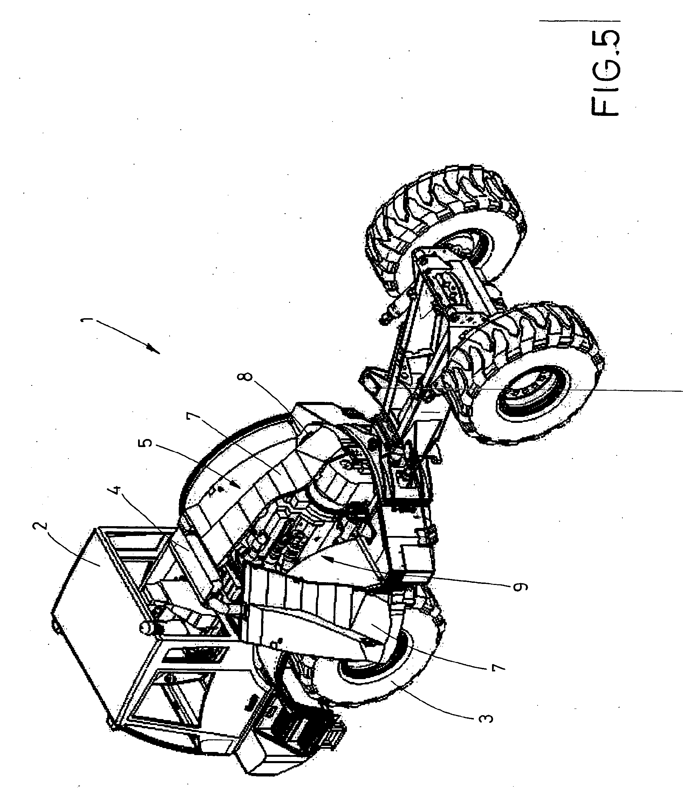

Die Figuren 4 und 5 zeigen den Vergleich zwischen der Haube 5 in geschlossenem Zustand und teilweise geöffnetem Zustand, in welchem der linke Flügel 7 gemäß Fig. 5 in eine Offenstellung verschwenkt ist. Dabei ist die gute Zugänglichkeit zum Motor 9 bei geöffneter Haube 5 ersichtlich. Weiterhin ist ersichtlich, dass die Flügel 7 der Haube 5 über die Kotflügel hinweg verschwenkt werden, welche die Vorderräder 3 abdecken. Es ist nicht erforderlich, diese Kotflügel zu demontieren oder anderweitig aus dem Schwenkweg der Flügel 7 zu bewegen.

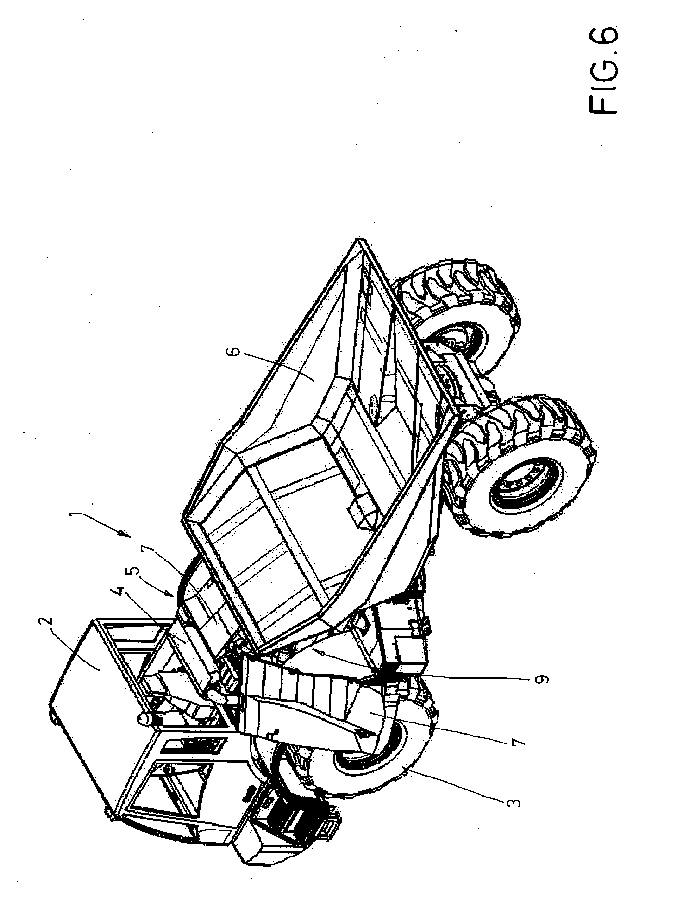

Fig. 6 zeigt die teilgeöffnete Haube 5 ähnlich wie Fig. 5, allerdings bei montierter Mulde. Die Flügel 7 der Haube 5 können geöffnet werden, ohne dass die Mulde 6 angehoben werden muss.

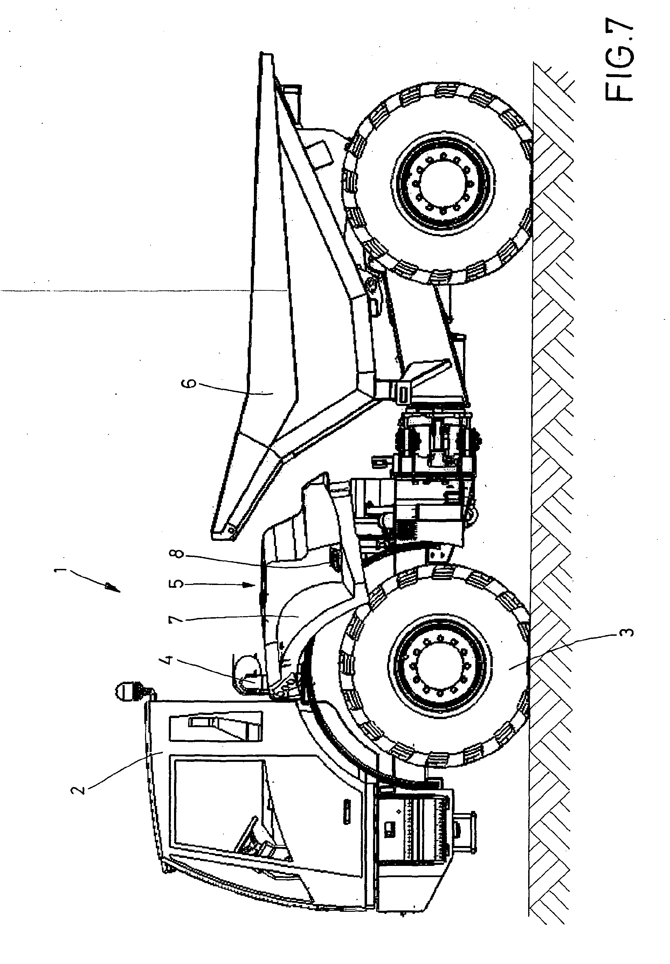

Fig. 7 zeigt eine Seitenansicht ähnlich Fig. 1, jedoch bei geöffneter Haube 5. Es ist ersichtlich, dass die Haube 5 bei abgesenkter Mulde 6 ihre Offenstellung einnehmen kann und auch zwischen der geschlossenen Normalstellung und der Offenstellung verschwenkt werden kann, ohne dass die Mulde 6 gekippt werden muss.

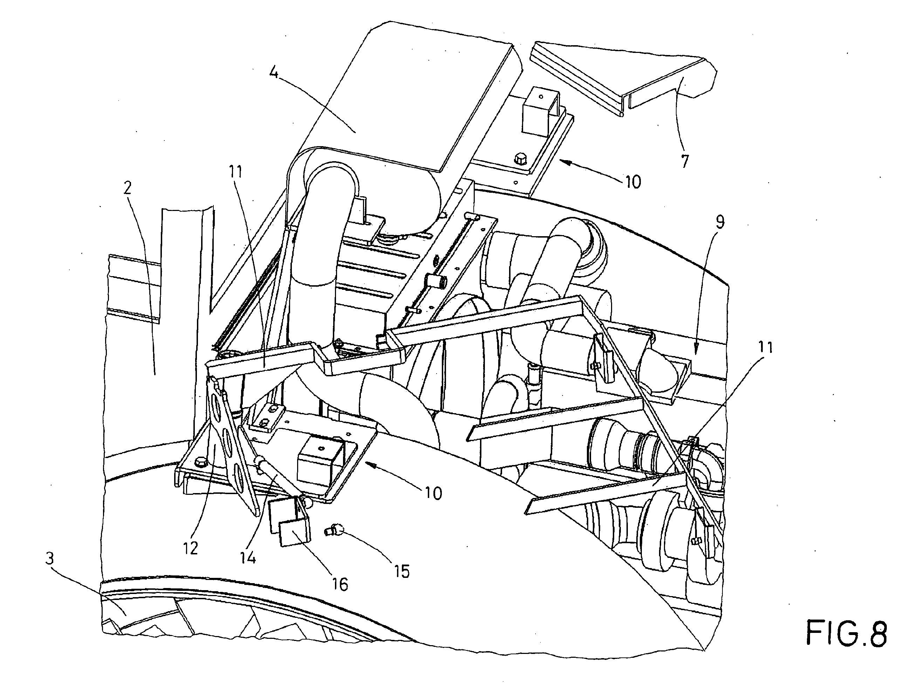

Weiterhin zeigt der Vergleich der Fig. 1 und 7, dass die Flügel 7 der Haube 5 nicht nur seitlich verschwenkt, sondern auch nach oben flach ansteigend in ihre Offenstellung verschwenkt werden. Dies resultiert aus einer von der Vertikalen abweichend schräg ausgerichteten Anordnung der Schwenkachse 12, die in Fig. 8 näher ersichtlich ist. Dort ist der Bereich oberhalb des linken Vorderrades 3, hinter der Fahrerkabine 2 dargestellt. Der Verlauf des Abgasrohres des Motors 9 zum Schalldämpfer 4 ist ersichtlich, und Konsolen 10 sind erkennbar, die auf den beiden vorderen Kotflügeln angeordnet sind. Beide Flügel 7 der Haube 5 befinden sich in ihrer Offenstellung, wobei in Fig. 8 der rechte Flügel 7 der Haube 5 dargestellt ist, während vorn linken Flügel 7 lediglich ein skelettartiger Tragrahmen 11, und auch dieser nur teilweise, dargestellt ist.

Auf der Konsole 10 ist eine aufrechte Schwenkachse 12 vorgesehen, um welche der gesamte Tragrahmen 11 und somit der gesamte linke Flügel 7 verschwenkbar ist. Diese Schwenkachse 12 ist nicht exakt vertikal ausgerichtet, sondern um 10° nach innen, also zur Fahrzeugmittelachse hin geneigt, so dass der Flügel 7 bei seiner Schwenkbewegung aus seiner dargestellten Offenstellung heraus entlang einer flachen Bahnkurve abwärts in seine Schließstellung bzw. Normalstellung geschwenkt wird und aus dieser Normalstellung in seine in Fig. 8 dargestellte Offenstellung angehoben wird.

In dieser angehobenen Offenstellung wird der Flügel 7 durch eine Gasdruckfeder 14 gehalten, die mit einem Kugelgelenkkopf an ihrem einen Ende auf der Konsole 10 festgelegt ist und deren am anderen Ende vorgesehener zweiter Kugelgelenkkopf, mit 15 bezeichnet und separat dargestellt, mit einem Bauelement 16 des Tragrahmens 11 verbunden ist. Mittels der Gasdruckfeder 14 wird der Flügel 7 in seiner Offenstellung automatisch gehalten. Da der Flügel 7 flach ausgerichtet ist, bietet er wenig Windangriffsfläche für horizontale Luftströmungen, die den Flügel um seine Schwenkachse 12 in seine geschlossene Normalstellung zurückzuschwenken bestrebt sind, so dass eine vergleichsweise einfache Konstruktion mit vergleichsweise preisgünstigen Bauteilen ausreicht, um die Haube zuverlässig in ihrer Offenstellung zu halten und dem Wartungspersonal ein sicheres Arbeiten zu ermöglichen.

In den Zeichnungen sind die Flügel 7 der Haube 5, wenn sie eine Offenstellung einnehmen, lediglich in teilgeöffnetem Zustand dargestellt. Über diesen Zustand hinausgehend können die Flügel weiter geöffnet werden, so dass sie schließlich eine Offenstellung einnehmen, in welcher sie um 90° gegenüber ihrer Normalstellung verschwenkt sind. Auf diese Weise wird ein besonders vollständiger Zugang zum Motor 9 ermöglicht. Aber auch die dargestellte Teilöffnung der Haube 5 bewirkt bereits eine gute Zugänglichkeit zu Motor- und Getriebeaggregaten, bei minimiertem Platzbedarf, da die seitliche Ausladung der Flügel 7 in der dargestellten Offenstellung vergleichsweise gering ist.

Insbesondere da die beiden Flügel 7 bei geschlossener Haube 5 unmittelbar aneinander anliegen und die Haube 5 somit keinen oberen, mittleren Steg aufweist, ist ein guter Zugang zum Motor 9 von oben möglich. Auch der Zugang zum Motor 9 von hinten ist problemlos, da keine Stege, lange Ausleger oder dergleichen für die Flügel 7 im Bereich von deren hinteren Enden, also jeweils an dem den Schwenklagern 12 gegenüberliegenden Ende der Flügel 7, vorgesehen sind.

## Patentansprüche

1. Motorfahrzeug,
mit einer Haube (5), welche ein als technische Komponente bezeichnetes Aggregat oder einen Behälter abdeckt,
wobei sich die Haube (5) oberhalb der Komponente erstreckt und diese nach oben hin abdeckt,
und wobei die Haube (5) aus ihrer abdeckenden Normalstellung in eine den Zugang zur Komponente ermöglichenden Offenstellung schwenkbeweglich ist,
wobei die Haube (5) zwei als Flügel (7) bezeichnete Segmente aufweist,
deren Trennlinie wenigstens teilweise oberhalb der Komponente verläuft,
**dadurch gekennzeichnet,**
**dass** jeder Flügel (7) um eine aufrechte Schwenkachse (12) zwischen seiner Normal- und der Offenstellung schwenkbar ist.

2. Motorfahrzeug nach Anspruch 1,
**dadurch gekennzeichnet,**
**dass** die Schwenkachse (12) gegenüber der Vertikalen schräg ausgerichtet ist.

3. Motorfahrzeug nach Anspruch 2,
**dadurch gekennzeichnet,**
**dass** die Schwenkachse (12) derart geneigt ist, dass die Schwenkbewegung des Flügels (7) von dessen Normal- in die Offenstellung entlang einer aufwärts gerichteten Bahnkurve verläuft.

4. Motorfahrzeug nach einem der vorhergehenden Ansprüche,
**dadurch gekennzeichnet,**
**dass** die beiden Flügel (7) direkt aneinander grenzen, unter Vermeidung eines Trennsteges, derart, dass bei geöffneten Flügeln (7) der zwischen den Flügeln (7) befindliche Bereich ungehindert zugänglich ist.

5. Motorfahrzeug nach einem der vorhergehenden Ansprüche,
**dadurch gekennzeichnet,**
**dass** das Nutzfahrzeug (1) eine Fahrerkabine (2) aufweist, welche vor der Vorderachse des Nutzfahrzeugs (1) angeordnet ist,
wobei die Komponente sich hinter die Fahrerkabine (2) erstreckt und die Haube (5) über die Vorderräder (3) hinweg schwenkbar ist.

6. Motorfahrzeug nach einem der vorhergehenden Ansprüche,
**dadurch gekennzeichnet,**
**dass** die Haube (5) über eine als Kotflügel bezeichnete Abdeckung von Fahrwerkskomponenten - wie Vorderräder (3) oder eine Kette - hinweg schwenkbar ist.

7. Motorfahrzeug nach einem der vorhergehenden Ansprüche,
**dadurch gekennzeichnet,**
**dass** die Flügel (7) um 90° schwenkbar sind.

8. Motorfahrzeug nach einem der vorhergehenden Ansprüche,
**dadurch gekennzeichnet,**
**dass** eine die Flügel (7) in ihrer Offenstellung haltende Sicherung vorgesehen ist.

9. Motorfahrzeug nach Anspruch 8,
**dadurch gekennzeichnet,**
**dass** die Sicherung als Gasdruckdämpfer ausgestaltet ist.

10. Motorfahrzeug nach einem der vorhergehenden Ansprüche,
**dadurch gekennzeichnet,**
**dass** ein Flügel (7) länglich ausgestaltet ist und die Schwenkachse (12) des Flügels (7) an dessen Ende angeordnet ist.

11. Motorfahrzeug nach Anspruch 10,
**dadurch gekennzeichnet,**
**dass** die beiden Flügel (7) parallel zueinander verlaufen und die Schwenkachsen (12) der Flügel (7) an deren benachbarten Enden angeordnet sind.

12. Nutzfahrzeug,
mit einer Vorrichtung zur Aufnahme einer Nutzlast - wie einer Sattelplatte, einer Pritsche, einer Mulde oder einer Schaufel,
oder mit einem Arbeitsgerät - wie einem Kran, einem Gleis-Stopfgerät oder einem Hubsteiger,
wobei das Nutzfahrzeug als Motorfahrzeug nach einem der vorhergehenden Ansprüche ausgestaltet ist.

13. Nutzfahrzeug nach Anspruch 12,
**dadurch gekennzeichnet,**
**dass** das Nutzfahrzeug (1) als Muldenkipper ausgestaltet ist,
mit einer Mulde (6), die zwischen einer abgesenkten Transport- und Beladestellung einerseits und einer angehobenen Entladestellung andererseits kippbeweglich ist,
wobei die Haube (5) bei abgesenkter Mulde (6) aus ihrer Normal- in ihre Offenstellung schwenkbar ist.

14. Nutzfahrzeug nach Anspruch 12 oder 13,
**dadurch gekennzeichnet,**
**dass** die Haube (5) die Motorhaube des Nutzfahrzeugs (1) bildet
